# EUROPÄISCHE PATENTSCHRIFT

(11) **EP 2 818 359 B1**
(45) Veröffentlichungstag und Bekanntmachung des Hinweises auf die Patenterteilung: **31.05.2017**
(21) Anmeldenummer: 14163935.1
(22) Anmeldetag: 08.04.2014
(51) Int. Cl.: B60N 2/22, B60N 2/48

(54) **Fahrzeugsitz und Nutzkraftfahrzeug mit einem Fahrzeugsitz**
Vehicle seat and commercial motor vehicle with a vehicle seat
Siège de véhicule et véhicule utilitaire doté d'un siège de véhicule

(30) Priorität: 26.06.2013 DE 102013106717; 20.09.2013 DE 102013110416
(43) Veröffentlichungstag der Anmeldung: 31.12.2014
(73) Patentinhaber: GRAMMER AG, 92224 Amberg (DE)
(72) Erfinder: Übelacker, Roland, 92536 Pfreimd (DE)
(74) Vertreter: Hannke, Christian

(56) Entgegenhaltungen:
- EP-A1- 2 599 659
- FR-A1- 2 932 429
- US-A- 3 342 528

## Beschreibung

Die Erfindung betrifft einen Fahrzeugsitz, insbesondere einen Nutzkraftfahrzeugsitz, mit einem Sitzteil, mit einer Rückenlehne umfassend ein Rückenlehnenunterteil und ein Rückenlehnenoberteil, und mit einer Haltevorrichtung, mittels welcher das Rückenlehnenoberteil gegenüber dem Rückenlehnenunterteil verlagerbar gehaltert ist.

Darüber hinaus betrifft die Erfindung ein Nutzkraftfahrzeug, insbesondere ein landwirtschaftliches Nutzkraftfahrzeug, mit wenigstens einem Fahrzeugsitz.

Gattungsgemäße Fahrzeugsitze insbesondere für Nutzkraftfahrzeuge und speziell für landwirtschaftliche Nutzkraftfahrzeuge sind aus dem Stand der Technik vielfältig und gut bekannt. Ein solcher, gattungsgemässer Fahrzeugsitz ist zumindest aus der EP2599659A1 bekannt. Insbesondere Fahrzeugführer von landwirtschaftlichen Nutzkraftfahrzeugen nehmen bei ihrer Arbeit mit diesen landwirtschaftlichen Nutzkraftfahrzeugen und daran angehängten Arbeitsgeräten oftmals über einen längeren Zeitraum eine von der normalen nach vorne, also in Fahrrichtung, gerichteten Fahrsitzhaltung eine seitlich oder rückwärtig ausgerichtete weitere Sitzarbeitshaltung ein, um beispielsweise seitlich hinten in der Fahrzeugkabine angeordnete Bedienorgane besser erreichen und bedienen zu können, oder auch nur um ein hinter dem landwirtschaftlichen Nutzkraftfahrzeug angehängtes Arbeitsgerät für einen längeren Zeitraum besser beobachten zu können.

Um dem Fahrzeugführer bei dieser seitlich oder rückwärtig ausgerichteten Sitzarbeitshaltung einen bedientechnisch erleichterten Zugang zu rückwärtig angeordneten Bedienorgangen oder auch nur optisch einen rückwärtigen Arbeitsbereich hinter einem Fahrzeugsitz besser einsehen bzw. beobachten zu können, ist aus der Offenlegungsschrift DE 30 46 049 A1 ein Fahrersitz bekannt, bei welchem die Rückenlehne zumindest zweigeteilt ist, und hierbei dementsprechend über ein oberes Rückenlehnenteil und ein unteres Rückenlehnenteil verfügt, wobei zumindest das obere Rückenlehnenteil um eine vertikale Achse verschwenkbar ist. Hierdurch kann der Fahrer sich jederzeit mit seinem oberen Rumpfbereich bzw. Oberkörper drehen, um beispielsweise die hinter dem Fahrzeugsitz liegenden Bedienorgane zu erreichen, da sich das obere Rückenlehnenteil um diese vertikale Achse drehen kann. Zwar kann der Fahrzeugführer hierbei über das untere Rückenlehnenteil hinweg problemlos nach hinten greifen, da das obere Rückenlehnenteil um die vertikale Achse gedreht ist, jedoch erfährt der Fahrzeugführer bei dieser Lösung keinerlei oder nur eine sehr unzureichende Abstützung seines Oberkörpers bei einer entsprechend seitlich oder rückwärtig ausgerichteten Sitzarbeitshaltung. Insofern wird der Fahrzeugführer durch das obere Rückenlehnenteil kaum nennenswert gestützt.

Bei einer anderen jüngeren Lösung können Fahrzeugführer zwischenzeitlich den gesamten Fahrzeugsitz, also die im Wesentlichen gesamte starre Sitzkonstruktion mitsamt dem Sitzteil und der Rückenlehne, mit Hilfe eines Drehadapters um eine definierte Drehhochachse drehen, um einen rückwärtigen Raum innerhalb der Fahrzeugkabine besser erreichen bzw. außerhalb der Fahrzeugkabine besser beobachten zu können. Dabei bleibt das Sitzteil in Relation zur gesamten Rückenlehne fest stehen. Etwaige Anbauteile am Fahrzeugsitz, beispielsweise eine Multifunktionsarmlehne, drehen sich ebenso in Relation dazu mit. Bedienhebel aber, die weiter hinten seitlich in der Fahrzeugkabine angeordnet sind, können dadurch immer noch nicht komfortabel betätigt werden.

Die letztgenannte Lösung führt darüber hinaus dazu, dass der Fahrzeugführer sich aus einer komfortablen Sitzpolsterkontur des Fahrzeugsitzes herausdrehen muss, um insbesondere die Pedalerie des landwirtschaftlichen Nutzkraftfahrzeugs weiter einigermaßen betriebssicher betätigen zu können. Dies wiederum kann zu Druckstellen und damit zu einem Diskomfort speziell im Gesäß- und Oberschenkelbereich des Fahrzeugführers führen.

Speziell die Rückenpolsterkontur ist aktuell derart ausgeformt, dass der Fahrzeugführer in der vorwärts gerichteten Fahrsitzhaltung maximal möglich gestützt wird, ohne ihm die notwendigen Freiheitsgrade zu nehmen, die er für seine Bewegungen im Fahrbetrieb benötigt. Um eine Bewegungsfreiheit im Schulter-Armbereich nicht zu behindern, darf das Rückenpolster der Rückenlehne im oberen Bereich nicht zu sehr konturiert sein. Um jedoch eine gute Abstützung und damit eine ausreichend gute Entlastung des Fahrzeugführers zu gewährleisten, sollte eine Abstützfläche in allen Fahrpositionen immer möglichst groß sein. Dies kann aus den vorher genannten Gründen, wie etwa die erforderlichen Freiheitsgrade für eine gute Bewegung, aktuell nur bedingt und daher unbefriedigend erzielt werden, da der Fahrer zwischen zwei extrem unterschiedlichen Fahrpositionen wechselt.

Ein weiterer großer Nachteil ist darin zu sehen, dass der mögliche Schwenkbereich des Drehadapters dadurch limitiert ist, dass das Nutzkraftfahrzeug trotz der Beobachtung der hinteren Arbeitsgeräte weiter über die Pedalerie und das Lenkrad verkehrssicher gesteuert werden muss. Um diesen Ansprüchen gerecht zu werden, muss der Fahrzeugführer oftmals über einen längeren Zeitraum eine Zwangshaltung einnehmen, welche unweigerlich zu einer kritischen Torsion des gesamten Körpers führt. Wissenschaftliche Untersuchungen zeigen zudem, dass eine derartige Zwangshaltung insbesondere unter Schwingungsbelastung zur Schädigung der Körperstrukturen führen kann, speziell wenn der Körper nicht ausreichend gut unterstützt wird. Des Weiteren steht fest, dass die Belastung der Wirbelsäule durch eine gute Abstützung über das Rückenlehnenteil signifikant reduziert werden kann.

Es ist Aufgabe der Erfindung, einem Fahrzeugführer einen verbesserten Sitzkomfort speziell bei einer Einnahme einer derartigen Zwangshaltung zu bieten, um insbesondere ein landwirtschaftliches Nutzkraftfahrzeug betriebssicherer und insbesondere verkehrssicherer führen zu können. Zudem ist es eine weitere Aufgabe der Erfindung, den Fahrzeugführer bei der Einnahme dieser Zwangshaltung vor einer vorzeitigen Ermüdung zu bewahren.

Die Aufgabe der Erfindung wird von einem Fahrzeugsitz gemäss dem Patentanspruch 1 gelöst. Erfindungsgemäss kann die Achse ein Teil oder mehrere Teile der Verlagerungskurve sein, so dass sich das Rückenlehnenoberteil beim seitlichen Verlagern um zumindest einen Abschnitt oder einen Teil der Verlagerungskurve dreht. Stattdessen oder zusätzlich kann das Rückenlehnenoberteil beim seitlichen Verlagern um eine quer zur Verlagerungskurve verlaufende Querachse gedreht werden.

Ist insbesondere ein Nutzkraftfahrzeugsitz mit einer derartigen Führungseinrichtung ausgerüstet, gelingt es den Fahrzeugführer bei einer nach hinten gerichteten Zwangsarbeitshaltung besonders gut abzustützen, ohne dass hierbei das Rückenlehnenoberteil der Rückenlehne ihm den Zugang an hinter dem Fahrzeugsitz befindliche Bedienorgane bzw. die Sicht auf ein durch das Nutzkraftfahrzeug geschlepptes Arbeitsgerät versperrt.

Im Gegensatz zu den aus dem Stand der Technik bekannten Lösungen kann mittels des Rückenlehnenoberteils nunmehr zusätzlich der Fahrzeugführerrumpf bei einer seitlich nach hinten gerichteten Zwangshaltung vorteilhaft abgestützt werden, wodurch eine besonders vorteilhafte Entlastung der Körperstrukturen bzw. der Körperrumpfstrukturen des Fahrzeugführers erzielt wird, so dass auch eine vorzeitige Ermüdung verhindert und damit auch die Arbeitseffizienz erhöht werden kann.

Mithilfe der erfindungsgemäßen Führungseinrichtung gelingt es auf konstruktiv besonders einfache Weise, das Rückenlehnenoberteil aus einer direkt oberhalb des Rückenlehnenunterteils platzierten Parkposition, welche bevorzugt mittig der Rückenlehne positioniert ist, hinaus und bis in eine seitlich der Rückenlehne befindliche Abstützlage hinein zu verschieben, um dort eine zusätzliche Fahrzeugführerrumpfabstützung zu ermöglichen.

Die Fahrzeugführerrumpfabstützung wird vorliegend jedoch nicht nur allein dadurch erzielt, dass das Rückenlehnenoberteil entlang der Verlagerungskurve seitlich über wenigstens einen der Seitenränder des Rückenlehnenunterteils linearverschieblich ist, sondern dass darüber hinaus das Rückenlehnenoberteil hierbei zusätzlich noch um diese Verlagerungsachse dreht, wodurch das Rückenlehnenoberteil sogleich nach hinten geneigt wird, wodurch insbesondere eine Abstützfläche für den Fahrzeugführerrumpf außergewöhnlich gut ausgerichtet in einem ansonsten fahrzeugsitzfreien Abstützbereich positioniert wird.

Diese Abstützfläche kann besonders gut mit an dem Rückenlehnenoberteil entsprechend vorgesehenen Rückenlehnenpolsterteilen ausgestaltet sein, wobei diese Rückenlehnenpolsterteile somit mit dem Rückenlehnenoberteil linearverschieblich sind.

Es versteht sich, dass dementsprechend das Rückenlehnenoberteil, aber auch das Rückenlehnenunterteil jeweils über Polsterteile zum Polstern der Rückenlehne insgesamt verfügen können, wobei diese Polsterteile entsprechend verschieblich zueinander angeordnet sind.

Kumulativ oder alternativ dreht das Rückenlehnenoberteil bei dessen seitlichen Verlagern um eine quer zur Längsverlagerungsachse verlaufenden Querachse, wodurch das Rückenlehnenoberteil zusätzlich noch um diese Querachse bezogen auf die Breitenerstreckung des Rückenlehnenoberteils nach unten geneigt werden kann, wodurch der Abstützkomfort für den Fahrzeugführer noch weiter erhöht werden kann.

Die Breitenerstreckung des Rückenlehnenoberteils fluchtet im Wesentlichen mit der Fahrzeugbreitenerstreckung, wenn sich das Rückenlehnenoberteil in seiner Parkposition befindet.

Bei der Querachse handelt es sich im Wesentlichen um eine Horizontalachse, die quer zur Verlagerungskurve angeordnet ist. Erfindungsgemäss ist die Achse, um welche das Rückenlehnenoberteil gedreht bzw. geschwenkt wird, eine Achse, die nicht quer zu zumindest einem Abschnitt der Verlagerungskurve sondern in einem Winkel zu einem Abschnitt der Verlagerungskurve drehbar ist, so dass ein Drehen des Rückenlehnenoberteils bei der seitlichen Verlagerung um diese Achse stattfindet.

Die Verlagerungskurve verläuft hierbei beispielsweise quer oder auch in jedem anderen Winkel zu der dem Fahrzeugsitz inne wohnende Hauptsitzrichtung, wobei die Hauptsitzrichtung im Normalfall in Richtung der Fahrzeuglängserstreckung verläuft. Somit kann das Rückenlehnenoberteil in einen seitlichen Bereich des Fahrzeugsitzes hinein verschoben und damit bei Bedarf derart vorteilhaft umplatziert werden, dass der Fahrzeugführer sich mit seinem Schulter-Armbereich bis über das Rückenlehnenunterteil drehen bzw. beugen kann, wo zuvor noch das Rückenlehnenoberteil in seiner Parkposition angeordnet war, und hierbei dennoch im oberen Bereich seines Rückens von dem in die Abstützlage hinein verschobenen Rückenlehnenoberteil gestützt werden kann.

Insgesamt soll das Rückenlehnenoberteil bezüglich des Rückenlehnenunterteils zur Seite verschwenkt werden, gleichzeitig nach unten gehen und zugleich idealerweise leicht nach vorne verschwenkt werden. Dabei kann das Rückenlehnenoberteil so weit verschwenkt werden, dass das Rückenlehnenoberteil über den seitlichen Rand des Rückenlehnenunterteils hinweg verschwenkt wird oder dass es, sofern es sich um einen Sitz mit stark ausgeprägten seitlichen nach vorne sich erstreckenden Polsterteilen am Rückenlehnenunterteil handelt, bis zu einem Seitenrand des Rückenlehnenunterteils oder zumindest in Richtung des Seitenrandes des Rückenlehnenunterteils verschoben wird und hierbei auch zusätzlich nach vorne gekippt bzw. geschwenkt wird. Jedenfalls findet immer eine seitliche Verschiebung und zusätzlich eine Drehung/Verschwenkung des Rückenlehnenoberteils nach unten und gegebenenfalls zusätzlich nach vorne, also sich mit einem Ende nach vorne erstreckend, statt, so dass auf bequeme Art und Weise der Benutzer sich mit seinem Oberkörper nach hinten wenden kann und zeitgleich bei dem sich nach hinten Wenden an der Rückseite des oberen Rückenbereiches abgestützt ist.

Die Verlagerungskurve kann durch eine körperliche Bauteildrehachse oder um eine fiktive Drehachse außerhalb eines oder mehrerer Bauteile oder einer Bauteilgruppe zumindest abschnittsweise ausgebildet sein.

Insofern ist es vorteilhaft, wenn die Verlagerungskurve quer zur Hauptsitzrichtung des Fahrzeugsitzes verlaufend angeordnet ist.

Die Verlagerungskurve erstreckt sich vorliegend idealerweise in der Hauptverschieberichtung, in welche das Rückenlehnenoberteil seitlich über den Seitenrand des Rückenlehnenunterteils hinaus verschoben wird.

Der Begriff "Sitzteil" umschreibt im Sinne der Erfindung denjenigen Bereich des Fahrzeugsitzes, auf welchem der Fahrzeugführer mit seinem Gesäß Platz nimmt. Insofern gestaltet das Sitzteil mithilfe von Sitzteilpolsterelementen eine entsprechende Sitzfläche aus.

Dementsprechend beschreibt der Begriff "Rückenlehne" einen Bereich des Fahrzeugsitzes, an welchem sich der Fahrzeugführer im Wesentlichen mit seinem Rücken abstützen kann, während er auf dem Sitzteil sitzt. Die Rückenlehne erstreckt sich demnach vom hinteren Ende des Sitzteils aus hochwärts über das Sitzteil hinaus.

Hierbei ist die Rückenlehne in ein Rückenlehnenoberteil und in ein Rückenlehnenunterteil gegliedert, wobei das Rückenlehnenoberteil gegenüber dem Rückenlehnenunterteil und damit auch gegenüber dem Sitzteil linearverschieblich gelagert ist.

Das Rückenlehnenunterteil ist vorzugsweise ortsfest gegenüber dem Sitzteil an dem Fahrzeugsitz angeordnet ist. Dies ist jedoch nicht zwingend erforderlich. Das Rückenlehnenunterteil stellt somit einen gegenüber dem Sitzteil ortsfesten Teil der Rückenlehne dar.

Insofern stellt das Rückenlehnenoberteil einen gegenüber dem Sitzteil zumindest seitlich verschieblichen Teil der Rückenlehne dar.

Hierzu ist die Haltevorrichtung vorgesehen, welche idealerweise unmittelbar an dem Rückenlehnenunterteil befestigt ist, um das Rückenlehnenoberteil gegenüber diesem Rückenlehnenunterteil entlang einer fiktiven Verlagerungskurve verschieben zu können. Es ist jedoch bei entsprechender Ausgestaltung des Fahrzeugsitzes auch möglich, dass diese Haltevorrichtung an einem anderen Bereich der Rückenlehne bzw. an einem Gestell des Fahrzeugsitzes vorgesehen ist. Alternativ kann diese Haltevorrichtung auch karosserieseitig des jeweiligen Nutzkraftfahrzeuges vorgesehen sein, um das Rückenlehnenoberteil gegenüber dem Rückenlehnenunterteil entsprechend linearverschieblich haltern bzw. lagern zu können.

Jedenfalls kann mit dem vorliegenden Rückenlehnenoberteil im Sinne der Erfindung eine außerhalb des Sitzteils und der Rückenlehne anordenbare zusätzliche Fahrzeugführerrumpfabstützeinrichtung bereitgestellt werden, um den Fahrzeugführer in der Zwangshaltung hinsichtlich einer seitlich oder rückwärtig ausgerichteten Sitzarbeitshaltung zusätzlich abzustützen.

Demnach gelingt mit diesem erfindungsgemäß geführten Rückenlehnenoberteil einerseits eine erhebliche Sitzkomfortverbesserung.

Andererseits wird der Fahrzeugführer darüber hinaus auch vor einer vorzeitigen Ermüdung geschützt, insbesondere wenn er über einen langen Zeitraum den rückwärtigen Bereich des Nutzkraftfahrzeugs visuell überwachen muss. Speziell hierdurch wird die Unfallgefahr erheblich reduziert und somit die Arbeitssicherheit erhöht.

Das Rückenlehnenoberteil bzw. die durch dieses verkörperte Fahrzeugführerrumpfabstützeinrichtung ist zumindest teilweise in einem ansonsten fahrzeugsitzfreien Abstützbereich in Höhe des Bereichs der oberen Hälfte von der Rückenlehne, und außer mittig seitlich der Rückenlehne temporär derart anordenbar, dass der auf dem Fahrzeugsitz sitzende Fahrzeugführer während einer seitlich oder rückwärtig ausgerichteten Sitzarbeitshaltung zumindest in Höhe seines Schulter- und/oder Brustkorbbereichs außer mittig seitlich der Rückenlehne abgestützt ist, wobei die zusätzliche Fahrzeugführerrumpfabstützeinrichtung mit einer Verlagerungseinrichtung von der Parkposition in eine zusätzliche Abstützlage in dem ansonsten fahrzeugsitzfreien Abstützbereich verlagerbar angeordnet ist.

Im vorliegenden Fall handelt es sich bei der Verlagerungseinrichtung um die Führungseinrichtung und kann auch eine Linearführungseinrichtung sein.

Vorteilhafterweise kann der Fahrzeugführer durch die derart angeordnete zusätzliche Fahrzeugführerrumpfabstützeinrichtung während einer Zwangshaltungseinnahme, insbesondere der vorstehend beschrieben seitlich oder rückwärtig ausgerichteten Sitzarbeitsstellung, außerordentlich gut entlastet werden. Und vorzugsweise zwar nur dann, wenn es erforderlich ist, steht die zusätzliche Fahrzeugführerrumpfabstützeinrichtung zur Verfügung. Ansonsten, etwa in einer vorwärts ausgerichteten Fahrposition, stört die zusätzliche Fahrzeugführerrumpfabstützeinrichtung nicht, da sie in ihrer Ruhelage bzw. angestammten Parkposition verbleibt.

Vorteilhaft ist die zusätzliche Fahrzeugführerrumpfabstützeinrichtung, und somit auch das Rückenlehnenoberteil, derart anordenbar, dass der auf dem Fahrzeugsitz sitzende Fahrzeugführer während einer seitlich oder rückwärtig ausgerichteten Sitzarbeitshaltung zumindest in Höhe seines Schulter- und/oder Brustkorbbereichs außermittig seitlich der Rückenlehne abgestützt ist.

Der Begriff "zusätzliche Fahrzeugführerrumpfabstützeinrichtung" beschreibt im Sinne der Erfindung eine Einrichtung zur zusätzlichen Rumpfabstützung des Fahrzeugführers während einer Zwangshaltung am Fahrzeugsitz. Die konstruktive Umsetzung dieser zusätzlichen Fahrzeugführerrumpfabstützeinrichtung gelingt mit dem hier beschriebenen Rückenlehnenoberteil baulich besonders einfach, so dass bei entsprechender konstruktiven Ausgestaltung beide Begriffe synonym verwendet werden können.

In vorliegendem Zusammenhang beschreibt die Begrifflichkeit "Rumpf" anatomisch den zentralen Bereich eines menschlichen Körpers und der Rumpf umfasst den Brustkorb, den Bauch, den Rücken sowie das Becken des menschlichen Körpers.

Insofern ist es vorteilhaft, wenn die zusätzliche Fahrzeugführerrumpfabstützeinrichtung eine Anlagefläche für einen Rücken- und/oder Schulterbereich eines Fahrzeugführers umfasst, wobei die Anlagefläche vorteilhafter Weise ergonomisch geformt ist, um der menschlichen Körperanatomie besonders gut zu entsprechen. Erst dies fördert besonders die Akzeptanz beim Fahrzeugführer eine derartige zusätzliche Rumpfabstützung häufig zu gebrauchen. Zumal ist der Körper des Fahrzeugführers durch eine derartige Anlagefläche vor Verletzungen gut geschützt, da es speziell im Einsatz mit landwirtschaftlichen Nutzfahrzeugen im Arbeitsbetrieb auf dem Acker oftmals sehr rau zugeht und der Fahrzeugführer hierbei für jede gezielte Rumpfabstützung dankbar ist.

Aber nicht nur eine derart entsprechend ausgeformte Anlagefläche ist vorteilhaft. Vielmehr ist es erforderlich, diese Anlagefläche im Raum auch richtig ausgerichtet zu platzieren. Dies gelingt mit vorliegender Führungseinrichtung auf konstruktiv erstaunlich einfache und besonders effektive Weise, wie im Zusammenhang mit dem Rückenlehnenoberteil ausführlich erläutert.

Mit dem Begriff "fahrzeugsitzfreier Rumpfabstützbereich" ist im Sinne der Erfindung ein Bereich am Fahrzeugsitz beschrieben, in welchem permanente Abstützeinrichtungen des Fahrzeugsitzes nicht sinnvoll dauerhaft angeordnet sein können, da sie im normalen Fahrbetrieb zu sehr störend auf den Fahrzeugführer wirken würden.

Der vorliegende fahrzeugsitzfreie Rumpfabstützbereich liegt hierbei einerseits im Wesentlichen im oberen Drittel der Rückenlehne, also oberhalb der halben Höhe der Rückenlehne und damit oftmals auch im unmittelbaren Sichtbereich seitlichen bzw. rückwärtigen Sichtbereich des Fahrzeugführers. Er kann sich auch noch bis oberhalb des oberen Drittels erstrecken. Allein deshalb ist dieser fahrzeugsitzfreie Rumpfabstützbereich zumindest im normalen Vorwärtsfahrbetrieb unbedingt freizuhalten. Demnach ist er nicht mit einem herkömmlichen Abstützbereich zu verwechseln. Andererseits befindet sich der fahrzeugsitzfreie Rumpfabstützbereich im Sinne der Erfindung außermittig der Rückenlehne. Allein hierdurch ist er nicht mit einem herkömmlichen Abstützbereich zu verwechseln, in welchem eine Kopfstütze platziert ist. Erst recht nicht, da der fahrzeugsitzfreie Rumpfabstützbereich zudem vor der Rückenlehne bzw. einem Rückenlehnenpolsterteilelement, und seitlich hiervon angeordnet ist. Insofern ist der vorliegende fahrzeugsitzfreie Rumpfabstützbereich auch seitlich und oberhalb des Sitzteils des Fahrzeugsitzes vorgesehen.

Die Beschreibung "seitlich oder rückwärtig ausgerichteten Sitzarbeitshaltung" formuliert vorliegend eine Zwangshaltung des Fahrzeugführers bezüglich einer Oberkörperdrehung, um hierbei einen rückseitigen Arbeitsbereich insbesondere hinter dem landwirtschaftlichen Nutzfahrzeug besser beobachten zu können.

An dieser Stelle sei darauf hingewiesen, dass der vorliegende erfinderische Fahrzeugsitz nicht nur hinsichtlich eines Fahrzeugführers vorteilhaft eingesetzt werden kann. Vielmehr ist der erfindungsgemäße Fahrzeugsitz nahezu in jedem Anwendungsbereich einsetzbar, in welchem im Umfeld des Fahrzeugsitzes zumindest temporär eine zusätzliche Rumpfabstützung bereitgestellt werden soll.

Besonders stabil kann die zusätzliche Fahrzeugführerrumpfabstützeinrichtung von der Parkposition in die zusätzliche Rumpfabstützlage hinein verlagert werden, wenn die Verlagerungseinrichtung Mittel zum translatorischen Verlagern der zusätzlichen Fahrzeugführerrumpfabstützeinrichtung aufweist, wie dies mit der vorliegenden Führungseinrichtung hinsichtlich des Rückenlehnenoberteils der Fall ist.

Es versteht sich, dass die vorliegende Führungseinrichtung durch unterschiedlichste Mechaniken realisiert werden kann. Konstruktiv besonders einfach kann die Führungseinrichtung jedoch umgesetzt werden, wenn die Führungseinrichtung zumindest teilweise helixförmig ausgestaltet ist.

Beispielsweise umfasst die Führungseinrichtung hierzu ein oder mehrere Führungselemente, welche sich helixförmig, das heißt schraubenförmig, um die Verlagerungskurve herum erstreckend angeordnet sind, sodass das Rückenlehnenoberteil im Falle einer entsprechenden Linearverschiebung konstruktiv einfach um diese Verlagerungskurve drehbar ist.

Insofern ist das Rückenlehnenoberteil in diesem Fall vorteilhafterweise in Abhängigkeit einer Linearverschiebung drehbar um die Verlagerungskurve gelagert.

Es versteht sich, dass sich derartige helixförmige Führungselemente in vielfältiger Weise konstruktiv realisieren lassen, um hierdurch die Führungseinrichtung zumindest teilweise helixförmig auszugestalten. Beispielsweise ist ein derartiges mit Führungsnuten und/oder Führungsstegen ausgestattetes Führungselement entlang der Verlagerungskurve in sich verdreht.

Es hat sich in Praxistests herausgestellt, dass die Haltevorrichtung und insbesondere die Führungseinrichtung hiervon sehr große Fahrzeugführerrumpfabstützkräfte aufnehmen können, wenn die Führungseinrichtung zwei übereinander und voneinander beabstandet angeordnete Führungselemente umfasst, wobei eines der Führungselemente im Verlauf der Verlagerungskurve gegenüber dem anderen der Führungselemente verschieden positioniert ist.

Das heißt mit anderen Worten, dass das eine Führungselement in Richtung der Verlagerungskurve zumindest teilweise mit einer veränderten Lage gegenüber dem anderen Führungselement angeordnet ist.

Hierbei formulieren das erste Führungselement eine erste Kurvenbahn und das zweite Führungselement eine zweite Kurvenbahn, welche vorzugsweise zumindest teilweise mit einem sich verändernden Achsversatz zueinander angeordnet sind. Insofern sind die beiden Führungselemente mit einem sich verändernden Achsversatz ortsfest zueinander angeordnet. Hierdurch sind die beiden Kurvenbahnen zumindest bereichsweise windschief zueinander angeordnet.

Der Begriff "Führungselemente" beschreibt im Sinne der Erfindung länglich ausgestaltete Elemente, welcher verschieblich mit entsprechenden Lagermitteln geführt gelagert sind. Es ist klar, dass auch mehr als zwei solcher Führungselemente vorgesehen werden können, wodurch die Stabilität der Linearführungsvorrichtung erhöht werden kann; jedoch verkompliziert sich hierdurch auch der konstruktive Aufwand entsprechend.

Sind die beiden übereinander aber voneinander beabstandet angeordneten Führungselemente mit einem derartigen Verlauf zueinander angeordnet bzw. ausgerichtet, kann konstruktiv besonders einfach ein Achsversatz bezüglich dieser beiden Führungselemente erzielt werden, wodurch das Rückenlehnenoberteil beim seitlichen Verlagern um die Verlagerungskurve im Sinne der Erfindung geneigt werden kann.

Eine derartige Linearverschiebung des Rückenlehnenoberteils kann beispielsweise pneumatisch oder hydraulisch mit entsprechenden Pneumatik- bzw. Hydraulikzylinderelementen erfolgen.

Ein besonders einfach bauender Mechanismus hinsichtlich der Führungseinrichtung kann jedoch erzielt werden, wenn die Verschiebung manuell, gegebenenfalls noch durch ein oder mehrere Federelemente mechanisch unterstützt, erfolgt.

Eine konstruktiv sehr einfache Ausführungsvariante sieht dementsprechend vor, dass die Führungseinrichtung Gleitführungselemente und/oder Rollenführungselemente aufweist, wodurch das Rückenlehnenoberteil mittels einer Gleitlagerung oder einer Rollenlagerung an der Haltevorrichtung gelagert werden kann.

Im Sinne der Erfindung werden vorliegend unter dem Begriff "Gleitführungselemente" langgestreckte, längliche Führungselemente verstanden, welche gleitkörpergelagert sind.

Entsprechend beschreibt der Begriff "Rollenführungselemente" langgestreckte, längliche Führungselemente, welche wälzkörpergelagert bzw. rollengelagert sind.

Es versteht sich, dass auch eine Kombination aus Gleitlagerung und Rollenlagerung hinsichtlich der Führungseinrichtung realisiert sein kann, um eine zuverlässige Linearverschiebung des Rückenlehnenoberteils entlang der Verlagerungskurve gewährleisten zu können.

Es versteht sich des Weiteren, dass entsprechende Gleitführungselemente bzw. Rollenführungselemente in nahezu beliebiger Ausgestaltung und Anordnung an der Führungseinrichtung vorgesehen sein können.

Die vorliegende Führungseinrichtung lässt sich baulich besonders platzsparend in dem Fahrzeugsitz integrieren, wenn die Führungseinrichtung Stangen- und/oder Rohrelemente aufweist, welche innerhalb des Rückenlehnenoberteils angeordnet sind.

Idealerweise sind diese Stangen- und/oder Rohrelemente vollständig in dem Rückenlehnenoberteil integriert, sie können bei entsprechender Ausgestaltung jedoch auch nur teilweise innerhalb des Rückenlehnenoberteils angeordnet sein.

Jedenfalls kann das Rückenlehnenoberteil mithilfe dieser Stangen- und/oder Rohrelemente entlang der Verlagerungskurve verschoben werden, sodass das Rückenlehnenoberteil zumindest teilweise in den ansonsten fahrzeugsitzfreien Rumpfabstützbereich hinein geschoben werden kann.

Vorteilhafterweise sind die Stangen- und/oder Rohrelemente derart innerhalb des Rückenlehnenoberteils angeordnet, dass sie gemeinsam mit dem Rückenlehnenoberteil verlagert werden, um die Verlagerungskurve zumindest teilweise auszugestalten. Hierdurch kann gewährleistet werden, dass bei einer Verlagerung die Stangen- und/oder Rohrelemente gemeinsam mit dem Rückenlehnenoberteil in den ansonsten fahrzeugsitzfreien Rumpfabstützbereich verschoben vollständig werden, sodass oberhalb des Rückenlehnenunterteils ein Bauteilkomponenten freier Bereich im oberen Bereich der Rückenlehne am Fahrzeugsitz geschaffen werden kann.

Um die Gleitführungselemente bzw. die Rollenführungselemente betriebssicher führen zu können, ist es vorteilhaft, wenn die Führungseinrichtung Gleitlagerelemente und/oder Rollenlagerelemente aufweist, welche an dem Rückenlehnenunterteil angeordnet sind, und an welchen Stangen- und/oder Rohrelemente vorzugsweise quer oder mit einem anderen Winkel zur Hauptsitzrichtung geführt sind.

Mithilfe der Gleitlagerelemente bzw. Rollenlagerelemente sind vorteilhafte Lagermittel realisiert, mittels welchen die Stangen- und/oder Rohrelemente konstruktiv einfach und Bauraum sparend direkt an dem Rückenlehnenunterteil geführt werden können.

An dieser Stelle sei darauf hingewiesen, dass derartige Gleitlagerelemente bzw. Rollenlagerelemente nicht zwingend an dem Rückenlehnenunterteil befestigt sein müssen. Vielmehr können bei entsprechender Ausgestaltung diese auch an anderen Bereichen der Rückenlehne oder an einem dem Fahrzeugsitz nebengeordneten Gestell oder dergleichen angeordnet sein.

Vorteilhafterweise sind diese Gleitlagerelemente und/oder Rollenlagerelemente ortsfest an dem Rückenlehnenunterteil angeordnet, sodass sich ein besonders einfacher Aufbau einer mit der Führungseinrichtung ausgestalteten bzw. ausgestatteten Haltevorrichtung realisieren lässt.

Des Weiteren sieht eine vorteilhafte Ausführungsvariante vor, dass die Führungseinrichtung eine mindestens einmal, vorzugsweise eine mehrfach, gebogene Verlagerungskurve aufweist.

Beispielsweise reicht bereits eine nur einmal gebogene Verlagerungskurve dazu aus, das Rückenlehnenoberteil in eine Abstützlage hinein zu verschieben, welche unterhalb, oberhalb, vor oder hinter der mittigen Parkposition des Rückenlehnenoberteils positioniert ist.

Ist die Verlagerungskurve jedoch mehrfach gebogen, kann das Rückenlehnenoberteil entlang der Verlagerungskurve eine vielfältige Raumlagenveränderung erfahren, wodurch beispielsweise Hindernisse oder dergleichen umkurvt werden können.

Um beispielsweise auch auf dem Weg zwischen der mittigen Parkposition und der zusätzlichen Abstützlage des Rückenlehnenoberteils gegebenenfalls noch vorhandene Hindernisse umfahren zu können, ist es somit vorteilhaft, wenn die Führungseinrichtung eine mehrfach gebogene Verlagerungskurve aufweist.

Es versteht sich, dass das vorliegende Rückenlehnenoberteil in seiner Gesamtheit nur einen oberen Teilbereich der Rückenlehne an sich ausgestalten kann.

Es ist jedoch auch möglich, dass das Rückenlehnenoberteil lediglich ein Rückenlehnenpolsterelement ist, welches mittels der Führungseinrichtung entsprechend entlang einer Verlagerungskurve seitlich wenigstens in Richtung eines Seitenrandes des Rückenlehnenunterteils linearverschieblich ist, wobei ein Gestell bzw. ein Grundgerüst der Rückenlehne insbesondere gegenüber dem Sitzteil ortsfest ist, sodass lediglich das Rückenlehnenpolsterelement von der mittigen Parkposition in die außermittige zusätzliche Abstützlage hinein verlagert wird.

Jedenfalls umfasst das Rückenlehnenoberteil in beiden Ausführungsformen Rückenlehnenpolsterelemente, mithilfe welcher die vorliegend bereits erläuterte Abstützfläche ausgestaltet werden kann.

Darüber hinaus ist es möglich, dass das Rückenlehnenoberteil in Richtung seiner Breitenstreckung kumulativ auch unterteilt sein kann, sodass das Rückenlehnenteil nicht zur Gänze entlang der Verlagerungskurve verschoben wird, sondern nur eine erste Rückenlehnenoberteilhälfte, wobei diese erste Rückenlehnenoberteilhälfte durch einen Vertikalspalt von einer zweiten Rückenlehnenoberteilhälfte des Rückenlehnenoberteils räumlich getrennt ist.

Jedenfalls sieht eine nicht minder vorteilhafte Ausführungsvariante vor, dass die sich über die Rückenlehne erstreckenden Rückenlehnenteile mit in Sitzrichtung vor den Rückenlehnenteilen befindlichen Rückenlehnenpolsterelementen ausgestattet sind, wobei ein erstes Rückenlehnenpolsterelement ein unteres gegenüber dem Sitzteil in seitlicher Richtung ortsfestes Rückenlehnenpolsterelement ist, und ein weiteres Rückenlehnenpolsterelement oberhalb von dem ersten Rückenlehnenpolsterelement im Bereich des Rückenlehnenoberteils angeordnet ist, wobei das Rückenlehnenoberteil als eine außerhalb des Sitzteils und der Rückenlehne anordenbare zusätzliche Fahrzeugführerrumpfabstützeinrichtung ausgestaltet ist, welche zumindest teilweise in einem ansonsten fahrzeugsitzfreien Abstützbereich in Höhe des Bereichs des Rückenlehnenoberteils und außermittig seitlich der Rückenlehne temporär derart anordenbar ist, dass der auf dem Fahrzeugsitz sitzende Fahrzeugführer während einer seitlich oder rückwärtig ausgerichteten Sitzarbeitshaltung zumindest in Höhe seines Schulter- und/oder Brustkorbbereichs außermittig seitlich der Rückenlehne abgestützt ist, wobei die zusätzliche Fahrzeugführerrumpfabstützeinrichtung mit einer Verlagerungseinrichtung von einer mittigen Parkposition in eine zusätzliche Abstützlage in dem ansonsten fahrzeugsitzfreien Abstützbereich verlagerbar angeordnet ist.

Im vorliegenden Fall handelt es sich bei der Verlagerungseinrichtung um die Führungseinrichtung, die auch als Dreh- oder Rotationsführungseinrichtung ausgebildet sein kann, wie bereits vorstehend erwähnt.

Die Aufgabe der Erfindung wird darüber hinaus auch von einem Nutzkraftfahrzeug, insbesondere von einem landwirtschaftlichen Nutzkraftfahrzeug, mit wenigstens einem Fahrzeugsitz gelöst, bei welchem das Nutzkraftfahrzeug bzw. das landwirtschaftlich genutzte Nutzkraftfahrzeug mit einem Fahrzeugsitz nach einem der hier beschriebenen Merkmale bzw. nach einer der hier beschriebenen Merkmalskombinationen ausgerüstet ist.

Umfasst das Nutzkraftfahrzeug, insbesondere das landwirtschaftlich genutzte Nutzkraftfahrzeug, den erfindungsgemäßen Fahrzeugsitz, kann speziell für den Fahrzeugführer eine zusätzliche Rumpfabstützung im Arbeitsbetrieb insbesondere auf dem Acker oder auf sonstigen unbefestigten Wegen bereitgestellt werden, wodurch der Fahrzeugführer wesentlich besser geschützt ist, wie vorstehend bereits ausführlich erläutert und mehrfach beschrieben.

Weitere Vorteile, Ziele und Eigenschaften vorliegender Erfindung werden anhand anliegender Zeichnung und nachfolgender Beschreibung erläutert, in welchen ein Fahrzeugsitz beispielhaft mit unterschiedlich ausgestalteten Führungseinrichtungen dargestellt und beschrieben ist.

Komponenten bzw. Bereiche des Fahrzeugsitzes, welche in den einzelnen Figuren baugleich ausgestaltet sind, sind hierbei mit gleichen Bezugszeichen gekennzeichnet, wobei die Komponenten bzw. Bereiche nicht in allen Figuren beziffert und erläutert sein müssen. Insofern sind nur wesentlich geänderte Komponenten bzw. Bereiche, insbesondere hinsichtlich der beispielhaft gezeigten zwei möglichen Führungseinrichtungen, mit neuen Bezugszeichen versehen.

Die Führungseinrichtung kann als Linearführungseinrichtung und die Verlagerungskurve als Linearverlagerungsachse ausgebildet sein.

In der Zeichnung zeigen:
- Figuren 1a und 1b: schematisch eine perspektivische Ansicht und eine Hinteransicht eines Nutzkraftfahrzeugsitzes in einem Normalbetriebszustand mit einer Person, in welchem das Rückenlehnenoberteil in einer Parkposition mittig oberhalb des Rückenlehenunterteils angeordnet ist;
- Figuren 2a und 2b: schematisch eine weitere Ansicht und eine Hinteransicht des Nutzkraftfahrzeugsitzes in einem Sonderabstützbetriebszustand mit einer Person, in welchem das Rückenlehnenoberteil außermittig seitlich des Rückenlehnenunterteils im Sinne einer Fahrzeugführerrumpfabstützeinrichtung in einer Abstützlage hinein verschoben angeordnet ist;
- Figur 3: schematisch eine erste Detailansicht einer ersten möglichen Führungseinrichtung des Rückenlehnenoberteils in einer Ausgangsposition, bei welcher zwei übereinander und voneinander beabstandet angeordnete gekrümmte Führungselemente an Halteelementen gelagert sind;
- Figur 4: schematisch eine zweite Detailansicht der ersten möglichen Führungseinrichtung in einer seitlich weiter hinaus geschobenen Seitenposition (erste Zwischenlage), bei welcher die beiden Führungselemente auf Höhe der Halteführungselemente bereits einen ersten Achsversatz zueinander aufweisen;
- Figur 5: schematisch eine weitere Detailansicht der ersten möglichen Führungseinrichtung in einer seitlich noch weiter hinaus geschobenen Seitenposition (zweite Zwischenlage), bei welcher die beiden Führungselemente auf Höhe der Halteführungselement einen größeren Achsversatz zueinander aufweisen;
- Figur 6: schematisch eine letzte Detailansicht der ersten möglichen Führungseinrichtung in einer Endposition, bei welcher die beiden Führungselemente auf Höhe der Halteführungselement einen maximalen Achsversatz zueinander aufweisen;
- Figur 7: schematisch eine Detailansicht einer weiteren möglichen Führungseinrichtung des Rückenlehnenoberteils in einer Ausgangsposition, bei welcher zwei übereinander und voneinander beabstandet angeordnete Führungselemente mehrfach gekrümmt sind; und
- Figur 8: schematisch eine weitere Detailansicht der Führungseinrichtung aus der Figur 7 in einer Endposition, in welcher sich das Rückenlehnenoberteil in einer Abstützlage befindet.

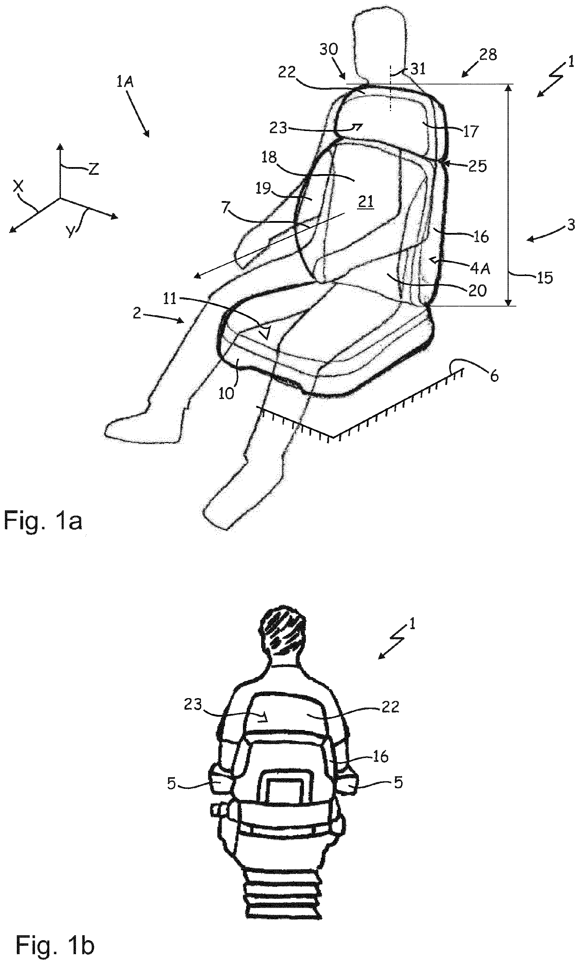

Bei dem in den Figuren 1 bis 8 gezeigten Fahrzeugsitz 1 handelt es sich um einen Nutzkraftfahrzeugsitz 1A, welcher ein Sitzteil 2 und eine Rückenlehne 3 aufweist, wobei an dem rechten Seitenrand 4A an der Rückenlehne 3 noch eine Armlehne 5 vorgesehen ist.

Der Nutzkraftfahrzeugsitz 1 A ist mit seinem Sitzteil 2 mittels eines hier nicht gezeigten Fahrzeugsitzunterteils an einer Karosserie (hier nicht gezeigt) eines Nutzkraftfahrzeugs 6 befestigt.

Das Nutzkraftfahrzeug 6 definiert eine Fahrzeuglängserstreckung X, eine Fahrzeugbreitenerstreckung Y und eine Fahrzeughöhenerstreckung Z, welche auch hinsichtlich der Orientierung des Nutzkraftfahrzeugsitzes 1 A verwendet werden können.

Insofern kann mithilfe der Fahrzeuglängserstreckung X eine Position bzw. Lageveränderung "vor" bzw. "hinter" bezüglich der Rückenlehne 3 definiert werden.

Mithilfe der Fahrzeugbreitenerstreckung Y kann eine Position bzw. Lageveränderung "seitlich" bzw. "neben" bezüglich der Rückenlehne 3 definiert werden.

Und mithilfe der Fahrzeughöhenerstreckung Z kann dementsprechend eine Position bzw. Lageveränderung "oben" bzw. "unten" bezüglich der Rückenlehne 3 definiert werden.

Hierbei ist der Nutzkraftfahrzeugsitz 1 A derart in dem Nutzkraftfahrzeug 6 angeordnet, dass die Hauptsitzrichtung 7 des Nutzkraftfahrzeugsitzes 1 A im Wesentlichen mit der Fahrzeuglängserstreckung X fluchtet.

Das Sitzteil 2 umfasst ein Sitzteilpolsterelement 10, welches die eigentliche Sitzteilfläche 11 des Sitzteils 2 ausgestaltet.

Hinsichtlich der Rückenlehne 3 verhält es sich ähnlich, wobei die Rückenlehne 3 über ihre Gesamthöhe 15 in ein Rückenlehnenunterteil 16 und ein Rückenlehnenoberteil 17 unterteilt ist. Die Gesamthöhe 15 erstreckt sich im Wesentlichen in Richtung der Fahrzeughöhenerstreckung Z.

Hierbei umfasst das Rückenlehnenunterteil 16 ein Unterteilpolsterelement 18 mit äußeren Wangenbereichen 19 und 20, sodass das Rückenlehnenunterteil 16 insgesamt eine stark konturierte Unterteilfläche 21 ausgestaltet.

Dementsprechend umfasst das Rückenlehnenoberteil 17 ein Oberteilpolsterelement 22, welches jedoch eine glatte Oberteilfläche 23 ausgestaltet.

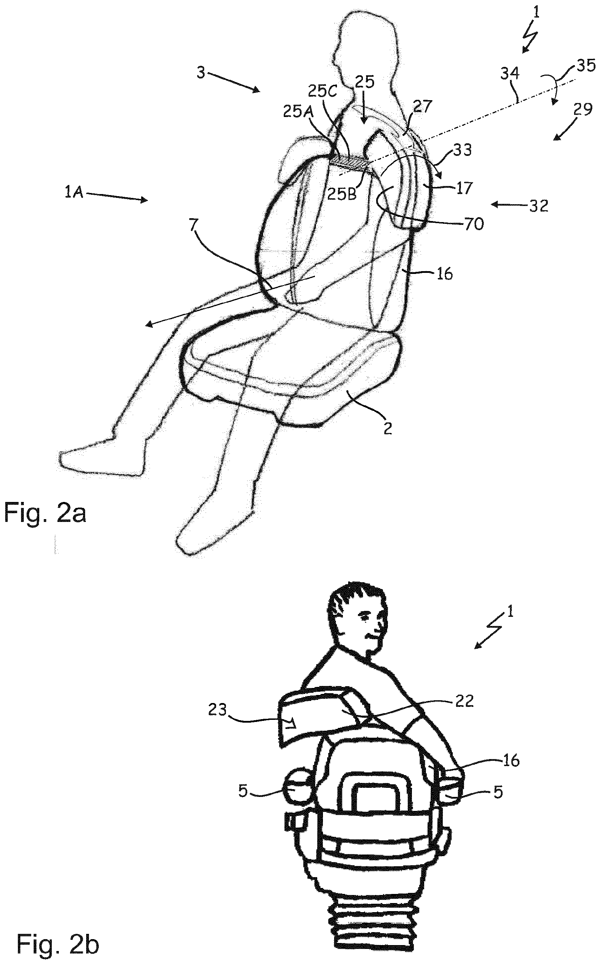

Darüber hinaus umfasst der Nutzkraftfahrzeugsitz 1A eine Haltevorrichtung 25 (siehe insbesondere ab Figuren 2a und 2b), mittels welcher das Rückenlehnenoberteil 17 gegenüber dem Rückenlehnenunterteil 16 verlagerbar an der Rückenlehne 3 gehaltert ist.

Die Haltevorrichtung 25 ist hierbei mittels nur schematisch angedeuteter Haltebügelelemente 25A und 25B, welche mit einem Halteplattenelement 25C untereinander starr verbunden sind, in entsprechend in dem Rückenlehnenunterteil 16 eingelassenen Haltebuchsen (hier nicht gezeigt) lösbar festgelegt.

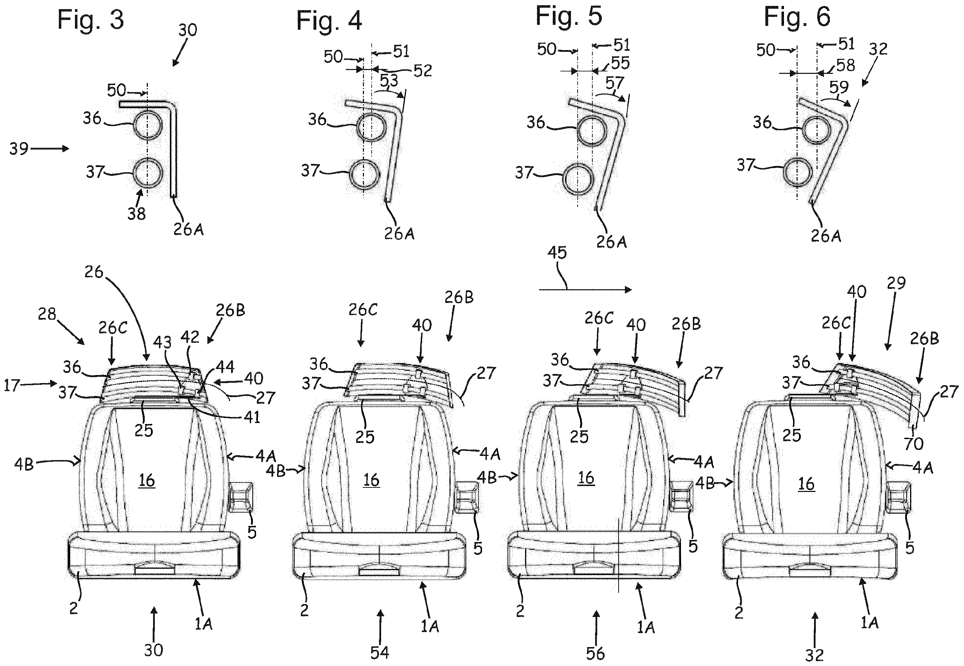

Diese derart ausgestaltete Haltevorrichtung 25 weist die erfindungsgemäße Führungseinrichtung 26 (siehe ab Figur 3) auf, die derart ausgestaltet ist, dass das Rückenlehnenoberteil 17 entlang einer fiktiven Verlagerungskurve 27 seitlich über wenigstens einen Seitenrand 4 des Rückenlehnenunterteils 16 bzw. der Rückenlehne 3 linearverschieblich verlagerbar ist, während das Rückenlehnenunterteil 16 gegenüber dem Sitzteil 2 ortsfest ist.

Insofern stellt das Rückenlehnenoberteil 17 den gegenüber dem Sitzteil 2 seitlich verschieblichen Teil der Rückenlehne 3 dar, während das Rückenlehnenunterteil 16 den gegenüber dem Sitzteil 2 ortsfesten Teil der Rückenlehne 3 darstellt.

Hierdurch kann das Rückenlehnenoberteil 17 aus einer mittigen Parkposition 28 (siehe Figuren 1a, 1b, 3 und auch 7) heraus entlang der Verlagerungskurve 27 in eine außermittige Abstützlage 29 (siehe Figuren 2a und 2b, 6 und auch 8) hinein verlagert bzw. geschoben werden.

Da die Gesamthöhe 15 in Richtung der Fahrzeughöhenerstreckung Z verläuft, ist klar, dass das Rückenlehnenoberteil 17 zumindest in der mittigen Parkposition 28 vollständig über dem Rückenlehnenunterteil 16, das heißt oberhalb des Rückenlehnenunterteils 16, positioniert ist, sodass der Fahrzeugführer in diesem Normalbetriebszustand in Hauptsitzrichtung 7 bequem auf dem Nutzkraftfahrzeugsitz 1A Platz nehmen kann.

Die fiktive Verlagerungskurve 27 verläuft hierbei quer zur Hauptsitzrichtung 7 bzw. zur Fahrzeuglängserstreckung X. Insofern erstreckt sich die fiktive Verlagerungskurve 27 im Wesentlichen in Fahrzeugbreitenerstreckung Y.

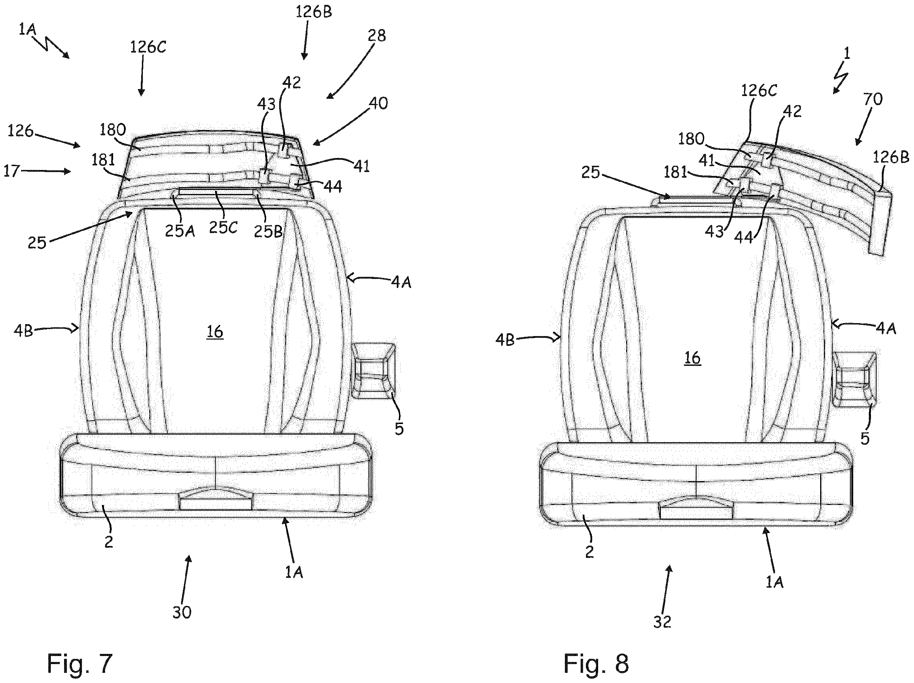

In der mittigen Parkposition 28 des Rückenlehnenoberteils 17 befindet sich die Führungseinrichtung 26 bzw. entsprechende Bauteile hiervon in einer Ausgangslage 30 (siehe auch Figuren 3 bzw. 7).

Diese mittige Parkposition 28 bzw. diese Ausgangslage 30 definieren sich dadurch, dass einerseits das Rückenlehnenoberteil 17 bzw. andererseits die Führungseinrichtung 26 sich mittig in Bezug auf eine vertikale Mittelachse 31 der Rückenlehne 3 befinden. Die vertikale Mittelachse 31 erstreckt sich im Wesentlichen in Richtung der Fahrzeughöhenerstreckung Z. Insofern befindet sich die mittige Parkposition 28 mittig zwischen den beiden Seitenrändern 4A und 4B.

Hinsichtlich der außermittigen Abstützlage 29 des Rückenlehnenoberteils 17 befindet sich die Führungseinrichtung 26 in einer seitlichen außermittigen Endlage 32 (siehe insbesondere Figuren 2a und 2b und 6), wobei sich diese seitliche außermittige Endlage 32 rechts neben der vertikalen Mittelachse 31 und damit auch zumindest teilweise rechts neben der rechten Seitenwand 4A des Rückenlehnenunterteils 16 befindet.

Es versteht sich, dass bei entsprechend ausgestalteter Führungseinrichtung 26 die seitliche außermittige Endlage 32 auch links neben der vertikalen Mittelachse 31 und damit auch zumindest teilweise links neben der linken Seitenwand 4B des Rückenlehnenunterteils 16 angeordnet sein kann.

Die Führungseinrichtung 26 ist in diesem Ausführungsbeispiel vollständig innerhalb des Rückenlehnenoberteils 17 untergebracht bzw. von dem Rückenlehnenoberteil 17 zumindest teilweise verdeckt, sodass sie nach den Darstellungen gemäß der Figuren 1a, 1b und 2 auch nicht explizit dargestellt ist.

Das Rückenlehnenoberteil 17 ist mittels der erfindungsgemäßen Führungseinrichtung 26 nicht nur linearverschieblich über den rechten Seitenrand 4A des Rückenlehnenunterteils 16 linearverschieblich verlagerbar, sondern darüber hinaus auch noch nach hinten bezüglich der Rückenlehne 3 bzw. nach unten bezüglich der Rückenlehne 3 neigbar, wenn das Rückenlehnenoberteil 17 entlang der fiktiven Verlagerungskurve 27 verschoben wird.

Insofern ist das Rückenlehnenoberteil 17 in diesem Ausführungsbeispiel beim seitlichen Verlagern zusätzlich um die fiktive Verlagerungskurve 27 in eine erste Neigungsrichtung 33 drehbar und/oder um eine quer zu der Verlagerungskurve 27 verlaufende Querachse 34 in eine zweite Neigungsrichtung 35 drehbar.

Um eine solche mehrfach geneigte Lageänderung des Rückenlehnenoberteils 17 konstruktiv einfach derart zu bewerkstelligen, dass die Führungseinrichtung 26 kompakt und idealerweise vollständig in das Rückenlehnenoberteil 17 integriert werden kann, ist die Führungseinrichtung 26 zumindest teilweise helixförmig ausgestaltet.

In diesem konkreten ersten Ausführungsbeispiel ist der Effekt einer helixförmig ausgestalteten Führungseinrichtung 26 baulich einfach dadurch erzielt, dass die Führungseinrichtung 26 zwei nebeneinander und voneinander beabstandet angeordnete Führungselemente 36 und 37 in Gestalt von Rohrelementen 38 (hier nur exemplarisch beziffert) aufweist, wobei die beiden Führungselemente 36 und 37 zumindest teilweise zueinander windschief angeordnet sind, wenn sie nicht bereichsweise parallel zueinander verlaufen.

Das heißt, dass eines der Führungselemente 36 bzw. 37 im Verlauf der Verlagerungskurve 27 gegenüber dem anderen der Führungselemente 36 bzw. 37 verschieden innerhalb eines Gehäuseelements 26A der Führungseinrichtung 26 (siehe insbesondere ab Fig. 3) angeordnet ist.

Die beiden Führungselemente 36 und 37 sind in diesem Ausführungsbeispiel an einem ersten Ende 26B der Führungseinrichtung 26 somit parallel verlaufend zueinander angeordnet, während sie in Richtung eines zweiten Endes 26C windschief verlaufend zueinander angeordnet sind, wie besonders gut in den einzelnen Schnittdarstellungen 39 der jeweiligen oberen Teildarstellungen der Figuren 3 bis 6 zu sehen ist.

Die beiden Führungselemente 36 und 37 definieren hierbei die fiktive Verlagerungskurve 27, welche sich vorliegend fiktiv zwischen den beiden Führungselementen 36 und 37 erstreckt.

Hierbei sind die Führungselemente 36 und 37 derart gekrümmt ausgeführt, dass die fiktive Verlagerungskurve 27 einmal gekrümmt ist, wodurch das Rückenlehnenoberteil 17 einer Bahnkurve folgt, wenn es entlang der einmal gebogenen fiktiven Verlagerungskurve 27 verschoben wird.

Neben den beiden Führungselementen 36 und 37 umfasst die Führungseinrichtung 26 noch eine Halteeinrichtung 40, welche an der Haltevorrichtung 25 des Nutzkraftfahrzeugsitzes 1A befestigt ist.

Genauer gesagt, ist diese Halteeinrichtung 40 an dem Halteplattenelement 25C ortsfest angebracht.

Diese Halteeinrichtung 40 besteht in diesem Ausführungsbeispiel aus einem deltaförmig ausgestalteten Halteblechelement 41, an welchen wiederum drei Halteführungselemente 42, 43 und 44 befestigt sind.

Das deltaförmig ausgestaltete Halteblechelement 41 ist hierbei mit dem Halteplattenelement 25C stoffschlüssig verbunden, vorzugsweise verschweißt. Eine gleichwertige Verbindung kann alternativ auch mittels einer Schraub-, oder Nietverbindung oder dergleichen begründet sein.

In diesem Ausführungsbeispiel ist die Halteeinrichtung 40 also starr mit der Haltevorrichtung 25 verbunden. Ebenso sind die drei Halteführungselemente 42, 43 und 44 an dem Halteblechelement 41 der Halteeinrichtung 40 ortsfest festgelegt. Hierdurch ergibt sich insgesamt eine robuste und dauerfeste Befestigung des Rückenlehnenoberteils 17 gegenüber dem Rückenlehnenunterteil 16.

Durch das deltaförmig ausgestaltete Halteblechelement 41 kann die Halteeinrichtung 40 insgesamt kompakter gebaut werden und es ist darüber hinaus möglich, das erste Führungselement 36 lediglich mit dem ersten Halteführungselement 42, und das zweite Führungselement 37 sowohl mit dem zweiten Halteführungselement 43 als auch mit dem dritten Halteführungselement 44 derart wirkzuverbinden, dass die beiden Führungselemente 36 und 37 innerhalb der Halteführungselemente 42 bzw. 43 und 44 entlang der fiktiven Verlagerungskurve 27 erfindungsgemäß in Verschieberichtung 45 verschoben werden können.

Es versteht sich, dass diese Halteführungselemente 42, 43 und 44 entweder als Gleitlagerelemente und/oder als Rollenlagerelemente ausgestaltet sein können, welche an dem Rückenlehnenunterteil 16 mithilfe des Halteblechelements 41 der Halteeinrichtung 40 und der Haltevorrichtung 25 angeordnet sind, und an welchen gleichzeitig die als Rohrelemente 38 ausgestalteten Führungselemente 36 und 37 quer zur Hauptsitzrichtung 7 in Richtung der fiktiven Verlagerungskurve 27 geführt sind.

Nach der Darstellung gemäß der Figur 3 befindet sich die Führungseinrichtung 26 noch in der Ausgangslage 30 (vgl. Figur 1 a und 1 b), bei welcher sich das Rückenlehnenoberteil 17 in der mittigen Parkposition 28 befindet. Wie insbesondere nach der oberen Schnittdarstellung 39 der Figur 3 auf Höhe der Halteeinrichtung 40 gut zu erkennen ist, sind die beiden Führungselemente 36 und 37 im Bereich des ersten Endes 26B der Führungseinrichtung 26 gemeinsam zentrisch in einer Vertikalebene 50 parallel zueinander angeordnet. Insofern ist das Rückenlehnenoberteil 17 noch nicht im Sinne der Erfindung nach hinten bzw. nach unten geneigt angeordnet.

Im weiteren Verlauf der beiden Führungselemente 36 und 37 auf das zweite Ende 26C der Führungseinrichtung 26 zu, liegt das erste Führungselement 36 jedoch schon nicht mehr mit dem zweiten Führungselement 37 zentrisch in der gemeinsamen Vertikalebene 50, sondern es ist zentrisch in einer Vertikalparallelebene 51 angeordnet, sodass zwischen den beiden Führungselementen 36 und 37 ein erster Achsversatz 52 besteht, wie aus der oberen Schnittdarstellung 39 der Figur 4 auf Höhe der Halteeinrichtung 40 gut zu erkennen ist.

Da die beiden Führungselemente 36 und 37 fest in dem Gehäuseelement 26A verbaut sind, hat dies den Effekt, dass das Rückenlehnenoberteil 17 gemäß einem ersten Neigungswinkel 53 in die erste Neigungsrichtung 33 (siehe Figur 2a und 2b) nach hinten geneigt wird, wenn das Rückenlehnenoberteil 17 in Verschieberichtung 45 seitlich entlang der fiktiven Verlagerungskurve 27 bewegt wird (vgl. Figur 4). Gleichzeitig neigt sich das Rückenlehnenoberteil 17 in dieser ersten dargestellten Zwischenlage 54 aufgrund der etwas schräg angeordneten Halteeinrichtung 40 und der Krümmung der Führungselemente 36 und 37 nach unten in die zweite Neigungsrichtung 35 um die Querachse 34 (siehe auch Figur 2a und 2b).

Dieser Effekt verstärkt sich umso mehr das Rückenlehnenoberteil 17 in Richtung seiner außermittigen Abstützlage 29 bzw. die Führungseinrichtung 26 in Ihre Endlage 32 (siehe Figur 6) bewegt wird, da der Achsversatz zwischen den beiden Führungselementen 36 und 37 im Verlauf auf das zweite Ende 26C zu stetig zunimmt, wie beispielsweise nach der Darstellung gemäß der Figur 5 mit einem größeren Achsversatz 55 gut verdeutlicht ist.

Dementsprechend vergrößert sich in dieser zweiten Zwischenlage 56 auch der erste Neigungswinkel 53 zu einem größeren Neigungswinkel 57 (siehe Schnittdarstellung 39, Figur 5), und weiter bis die beiden Führungselemente 36 und 37 an ihr zweites Ende 26C in Verschieberichtung 45 durch die entsprechenden Halteführungselementen 42, 43 und 44 hindurch geschoben sind, und sich die Führungseinrichtung 26 letztendlich in ihrer Endlage 32 bzw. das Rückenlehnenoberteil 17 in ihrer außermittigen Abstützlage 29 befinden.

In dieser Endlage 32 können nun ein maximaler Achsversatz 58 und dementsprechend ein maximaler Neigungswinkel 59 ausgenutzt werden, um das Rückenlehnenoberteil 17 als maximal heraus geschobene und entsprechend positionierte Fahrzeugführerrumpfabstützeinrichtung 70 vollständig als zusätzliche Abstützfläche nutzen zu können.

Insofern kann das Rückenlehnenoberteil 17, sobald es insbesondere vollständig in seine außermittigen Abstützlage 29 (vgl. Figuren 2a, 2b und 6) hinein verlagert wurde, auch vollständig als zusätzliche Fahrzeugführerrumpfabstützeinrichtung 70 fungieren, wodurch der Sitzkomfort des Fahrzeugführers entsprechend erhöht ist.

Während hinsichtlich des ersten Ausführungsbeispiels die beiden Führungselemente 36 und 37 hinsichtlich der ersten in den Figuren 3 bis 4 detailliert gezeigten Führungseinrichtung 26 als Rohrelemente 28 noch eine einfache Krümmung aufweisen, sind in diesem weiteren Ausführungsbeispiel entsprechende Stangenelemente 180 und 181 einer in den Figuren 7 und 8 gezeigten alternativen Führungseinrichtung 126 mehrfach gekrümmt, sodass das Rückenlehnenoberteil 17 einer mehrfach gekrümmten fiktiven Verlagerungskurve (hier nicht explizit eingezeichnet) folgen kann. Hierdurch ist es möglich, dass das Rückenlehnenoberteil 17 beim Verlagern zwischen der mittigen Parkposition 28 (siehe Figur 7) und der außermittigen Abstützlage 29 (siehe Figur 8) vorteilhafterweise gegebenenfalls noch Hindernisse (hier nicht gezeigt) umfahren kann.

Ansonsten entspricht der in den Figuren 7 und 8 gezeigte Nutzkraftfahrzeugsitz 1A den zuvor in den Figuren 1 bis 6 bereits beschriebenen Aufbau, sodass auf die diesbezügliche Beschreibung verwiesen wird, um Wiederholungen zu vermeiden.

Es versteht sich, dass es sich bei den vorstehend erläuterten Ausführungsbeispielen lediglich um erste Ausgestaltungen des erfindungsgemäßen Fahrzeugsitzes handelt. Insofern beschränkt sich die Ausgestaltung der Erfindung nicht auf diese Ausführungsbeispiele.

### Bezugszeichenliste

- 1: Fahrzeugsitz
- 1A: Nutzfahrzeugsitz
- 2: Sitzteil
- 3: Rückenlehne
- 4: rechter Seitenrand
- 5: Armlehne
- 6: Nutzkraftfahrzeug
- 7: Hauptsitzrichtung
- 10: Sitzteilpolsterelement
- 11: Sitzteilfläche
- 15: Gesamthöhe
- 16: Rückenlehnenunterteil
- 17: Rückenlehnenoberteil
- 18: Unterteilpolsterelement
- 19: erster äußerer Wangenbereich
- 20: zweiter äußerer Wangenbereich
- 21: konturierte Unterteilfläche
- 22: Oberteilpolsterelement
- 23: glatte Oberfläche
- 25: Haltevorrichtung
- 25A: erstes Haltebügelelement
- 25B: zweites Haltebügelelement
- 25C: Halteplattenelement
- 26: Führungseinrichtung
- 26A: Gehäuseelement
- 26B: erste Ende
- 26C: zweites Ende
- 27: fiktive Verlagerungskurve
- 28: mittige Parkposition
- 29: außermittige Abstützlage
- 30: Ausgangslage
- 31: Vertikalmittelachse
- 32: Endlage
- 33: erste Neigungsrichtung
- 34: Querachse
- 35: zweite Neigungsrichtung
- 36: erstes Führungselement
- 37: zweites Führungselement
- 38: Rohrelement
- 39: Schnittdarstellungen
- 40: Halteeinrichtung
- 41: Halteblechelement
- 42: erstes Halteführungselement
- 43: zweites Halteführungselement
- 44: drittes Halteführungselement
- 45: Verschieberichtung
- 50: gemeinsame Vertikalebene
- 51: Vertikalparallelebene
- 52: erster Achsversatz
- 53: erster Neigungswinkel
- 54: erste Zwischenlage
- 55: größerer Achsversatz
- 56: zweite Zwischenlage
- 57: größerer Neigungswinkel
- 58: maximaler Achsversatz
- 59: maximaler Neigungswinkel
- 70: Fahrzeugführerrumpfabstützeinrichtung

- 126: alternative Führungseinrichtung
- 126B: erste Ende
- 126C: zweites Ende
- 180: erstes Stangenelement
- 181: zweites Stangenelement

## Patentansprüche

1. Fahrzeugsitz (1), insbesondere Nutzkraftfahrzeugsitz (1A), mit einem Sitzteil (2), mit einer Rückenlehne (3) umfassend ein Rückenlehnenunterteil (16) und ein Rückenlehnenoberteil (17), und mit einer Haltevorrichtung (25), mittels welcher das Rückenlehnenoberteil (17) gegenüber dem Rückenlehnenunterteil (16) verlagerbar gehaltert ist,
**dadurch gekennzeichnet, dass**
die Haltevorrichtung (25) eine Führungseinrichtung (26) aufweist, mittels welcher das Rückenlehnenoberteil (17) entlang einer Verlagerungskurve (27) seitlich in Richtung wenigstens eines Seitenrandes (4A, 4B) des Rückenlehnenunterteils (16) derart verlagerbar ist, dass das Rückenlehnenoberteil (17) beim seitlichen Verlagern zusätzlich um zumindest einen Abschnitt der Verlagerungskurve (27) in eine erste Neigungsrichtung und/oder um eine in einem Winkel zu der Verlagerungskurve (27), horizontal angeordneten Achse (34) drehbar ist.

2. Fahrzeugsitz (1) nach Anspruch 1,
**dadurch gekennzeichnet, dass**
die Achse (34) eine quer zu der Verlagerungskurve (27) verlaufende Querachse (34) ist oder das Rückenlehnenoberteil (17) beim seitlichen Verlagern um eine zusätzliche quer zu der Verlagerungskurve (27) verlaufende Querachse (34) drehbar ist.

3. Fahrzeugsitz (1) nach Anspruch 1 oder 2,
**dadurch gekennzeichnet, dass**
die Führungseinrichtung (26; 126) zumindest teilweise helixförmig ausgestaltet ist.

4. Fahrzeugsitz (1) nach einem der Ansprüche 1 -3,
**dadurch gekennzeichnet, dass**
die Führungseinrichtung (26; 126) zwei übereinander und voreinander beabstandet angeordnete Führungselemente (36, 37) umfasst, wobei eines der Führungselemente (36, 37) im Verlauf der Verlagerungskurve (27) gegenüber dem anderen der Führungselemente (36, 37) verschieden positioniert ist.

5. Fahrzeugsitz (1) nach einem der Ansprüche 1 bis 4,
**dadurch gekennzeichnet, dass**
die Führungseinrichtung (26; 126) Gleitführungselemente und/oder Rollenführungselemente aufweist.

6. Fahrzeugsitz (1) nach einem der Ansprüche 1 bis 5,
**dadurch gekennzeichnet, dass**
die Führungseinrichtung (26; 126) Stangen- und/oder Rohrelemente (38; 180, 181) aufweist, welche innerhalb des Rückenlehnenoberteils (17) angeordnet sind.

7. Fahrzeugsitz (1) nach einem der Ansprüche 1 bis 6,
**dadurch gekennzeichnet, dass**
die Führungseinrichtung (26; 126) Gleitlagerelemente und/oder Rollenlagerelemente aufweist, welche an dem Rückenlehnenunterteil (16) angeordnet sind, und an welchen Stangen- und/oder Rohrelemente (38; 180, 181) quer zur Hauptsitzrichtung (7) geführt sind.

8. Fahrzeugsitz (1) nach einem der Ansprüche 1 bis 7,
**dadurch gekennzeichnet, dass**
die Führungseinrichtung (26; 126) eine mindestens einmal, vorzugsweise mehrfach, gebogene Verlagerungskurve (27) aufweist.

9. Fahrzeugsitz (1) nach einem der Ansprüche 1 bis 8,
**dadurch gekennzeichnet, dass**
die Verlagerungskurve (26; 126) quer zur Hauptsitzrichtung (7) des Fahrzeugsitzes (1) verlaufend angeordnet ist.

10. Fahrzeugsitz (1) nach einem der Ansprüche 1 bis 9,
**dadurch gekennzeichnet, dass**
das Rückenlehnenoberteil (17) ein Rückenlehnenpolsterelement (22) ist.

11. Fahrzeugsitz (1) nach einem der Ansprüche 1 bis 10,
**dadurch gekennzeichnet, dass**
das Rückenlehnenoberteil (17) als eine außerhalb des Sitzteils (2) und der Rückenlehne (3) anordenbare zusätzliche Fahrzeugführerrumpfabstützeinrichtung (70) ausgestaltet ist, welche zumindest teilweise in einem ansonsten fahrzeugsitzfreien Abstützbereich in Höhe des Bereichs der oberen Hälfte von der Rückenlehne (3), und außermittig seitlich der Rückenlehne (3) temporär derart anordenbar ist, dass der auf dem Fahrzeugsitz (1) sitzende Fahrzeugführer während einer seitlich oder rückwärtig ausgerichteten Sitzarbeitshaltung zumindest in Höhe seines Schulter- und/oder Brustkorbbereichs außermittig seitlich der Rückenlehne (3) abgestützt ist, wobei die zusätzliche Fahrzeugführerrumpfabstützeinrichtung (70) mit einer Verlagerungseinrichtung (26; 126) von einer Parkposition (28) in eine zusätzliche Abstützlage (29) in dem ansonsten fahrzeugsitzfreien Abstützbereich verlagerbar angeordnet ist.

12. Nutzkraftfahrzeug (6), insbesondere landwirtschaftliches Nutzkraftfahrzeug, mit wenigstens einem Fahrzeugsitz (1),
**gekennzeichnet, durch**
einen Fahrzeugsitz (1) nach einem der vorhergehenden Ansprüche.

## Claims

1. Vehicle seat (1), in particular a utility motor vehicle seat (1A), comprising a seat part (2), comprising a backrest (3) that comprises a lower backrest part (16) and an upper backrest part (17), and comprising a holding device (25) by means of which the upper backrest part (17) is mounted displaceably with respect to the lower backrest part (16),
**characterised in that** the holding device (25) comprises a guide device (26), by means of which the upper backrest part (17) can be laterally displaced along a displacement curve (27) towards at least one side edge (4A, 4B) of the lower backrest part (16) in such a way that the upper backrest part (17) can also be additionally rotated about at least one portion of the displacement curve (27) in a first inclination direction and/or about an axis (34) arranged horizontally and at an angle to the displacement curve (27) during the lateral displacement.

2. Vehicle seat (1) according to claim 1, **characterised in that** the axis (34) is a transverse axis (34) extending transversely to the displacement curve (27), or the upper backrest part (17) can be rotated about an additional transverse axis (34) extending transversely to the displacement curve (27) during the lateral displacement.

3. Vehicle seat (1) according to either claim 1 or claim 2, **characterised in that** the guide device (26; 126) is helical at least in part.

4. Vehicle seat (1) according to any of claims 1 to 3, **characterised in that** the guide device (26; 126) comprises two guide elements (36, 37) that are arranged one on top of the other and so as to be mutually spaced apart, one of the guide elements (36, 37) being positioned differently on the path of the displacement curve (27) with respect to the other of the guide elements (36, 37).

5. Vehicle seat (1) according to any of claims 1 to 4, **characterised in that** the guide device (26; 126) comprises sliding guide elements and/or roller guide elements.

6. Vehicle seat (1) according to any of claims 1 to 5, **characterised in that** the guide device (26; 126) comprises rod elements and/or tube elements (38; 180, 181)
which are arranged inside the upper backrest part (17).

7. Vehicle seat (1) according to any of claims 1 to 6, **characterised in that** the guide device (26; 126) comprises sliding bearing elements and/or roller bearing elements which are arranged on the lower backrest part (16) and on which rod elements and/or tube elements (38; 180, 181) are guided transversely to the primary seating direction (7).

8. Vehicle seat (1) according to any of claims 1 to 7, **characterised in that** the guide device (26; 126) comprises displacement curve (27) that is bent at least once, preferably repeatedly.

9. Vehicle seat (1) according to any of claims 1 to 8, **characterised in that** the displacement curve (26; 126) is arranged so as to extend transversely to the primary seating direction (7) of the vehicle seat (1).

10. Vehicle seat (1) according to any of claims 1 to 9, **characterised in that** the upper backrest part (17) is a backrest cushion element (22).

11. Vehicle seat (1) according to any of claims 1 to 10, **characterised in that** the upper backrest part (17) is designed as an additional driver torso support device (70), which can be arranged outside the seat part (2) and the backrest (3) and which can temporarily be arranged at least in part in a support region which is otherwise free from vehicle seat at the level of the region of the upper half of the backrest (3) and laterally off-centre from the backrest (3), in such a way that the driver sitting on the vehicle seat (1) is supported laterally off-centre from the backrest (3) at least at the level of his/her shoulder and/or ribcage region during a laterally or rearwardly directed seated working posture, the additional driver torso support device (70) being arranged so as to be displaceable from a parked position (28) into an additional support position (29) in the support region which is otherwise free from vehicle seat by means of a displacement device (26; 126).

12. Utility motor vehicle (6), in particular an agricultural utility motor vehicle, comprising at least one vehicle seat (1), **characterised by** a vehicle seat (1) according to any of the preceding claims.

## Revendications

1. Siège de véhicule (1), en particulier siège de véhicule utilitaire (1A), ayant une partie siège (2), ayant un dossier (3) comportant une partie de dossier inférieure (16) et une partie de dossier supérieure (17), et ayant un dispositif de maintien (25) au moyen duquel la partie de dossier supérieure (17) est montée déplaçable par rapport à la partie de dossier inférieure (16),
**caractérisé par le fait que**
le dispositif de maintien (25) présente un dispositif de guidage (26) au moyen duquel la partie de dossier supérieure (17) est déplaçable latéralement le long d'une courbe de déplacement (27) en direction d'au moins un bord latéral (4A, 4B) de la partie de dossier inférieure (16) de telle sorte que la partie de dossier supérieure (17) est apte à tourner lors du déplacement latéral également autour d'au moins une section de la courbe de déplacement (27) dans une première direction d'inclinaison et/ou autour d'un axe (34) disposé horizontalement dans un angle par rapport à la courbe de déplacement (27).

2. Siège de véhicule (1) selon la revendication 1,
**caractérisé par le fait que**
l'axe (34) est un axe transversal (34) s'étendant transversalement à la courbe de déplacement (27) ou la partie de dossier supérieure (17) est apte à tourner lors du déplacement latéral autour d'un axe transversal supplémentaire (34) s'étendant transversalement à la courbe de déplacement (27).

3. Siège de véhicule (1) selon l'une des revendications 1 ou 2,
**caractérisé par le fait que**
le dispositif de guidage (26 ; 126) est configuré hélicoïdalement au moins en partie.

4. Siège de véhicule (1) selon l'une des revendications 1 à 3,
**caractérisé par le fait que**
le dispositif de guidage (26 ; 126) comporte deux éléments de guidage (36, 37) disposés l'un au-dessus de l'autre et à distance l'un de l'autre, un des éléments de guidage (36, 37) étant positionné différemment de l'autre élément de guidage (36, 37) sur le trajet de la courbe de déplacement (27).

5. Siège de véhicule (1) selon l'une des revendications 1 à 4,
**caractérisé par le fait que**
le dispositif de guidage (26 ; 126) présente des éléments de guidage coulissant et/ou des éléments de guidage à rouleaux.

6. Siège de véhicule (1) selon l'une des revendications 1 à 5,
**caractérisé par le fait que**
le dispositif de guidage (26 ; 126) présente des éléments formant tige et/ou tube (38 ; 180, 181) qui sont disposés à l'intérieur de la partie de dossier supérieure (17).

7. Siège de véhicule (1) selon l'une des revendications 1 à 6,
**caractérisé par le fait que**
le dispositif de guidage (26 ; 126) présente des éléments de palier lisse et/ou des éléments de palier à roulement qui sont disposés sur la partie de dossier inférieure (16) et sur lesquels des éléments formant tige et/ou formant tube (38 ; 180, 181) sont guidés transversalement à la direction d'assise principale (7).

8. Siège de véhicule (1) selon l'une des revendications 1 à 7,
**caractérisé par le fait que**
le dispositif de guidage (26 ; 126) présente une courbe de déplacement (27) qui est cintrée au moins une fois, de préférence plusieurs fois.

9. Siège de véhicule (1) selon l'une des revendications 1 à 8,
**caractérisé par le fait que**
la courbe de déplacement (26 ; 126) est disposée s'étendant transversalement à la direction d'assise principale (7) du siège de véhicule (1).

10. Siège de véhicule (1) selon l'une des revendications 1 à 9,
**caractérisé par le fait que**
la partie de dossier supérieure (17) est un élément de rembourrage de dossier (22).

11. Siège de véhicule (1) selon l'une des revendications 1 à 10,
**caractérisé par le fait que**
la partie de dossier supérieure (17) est configurée en tant que dispositif de support de torse de conducteur supplémentaire (70) apte à être disposé à l'extérieur de la partie siège (2) et du dossier (3), lequel est temporairement apte à être disposé au moins en partie dans une région de support qui est sinon exempte de siège de véhicule au niveau de la région de la moitié supérieure du dossier (3), et de façon latéralement excentrée du dossier de siège (3), de telle sorte que le conducteur assis sur le siège de véhicule (1) est supporté de façon latéralement excentrée du dossier (3) au moins au niveau de la région de ses épaules et/ou de sa cage thoracique pendant une posture de travail assise dirigée latéralement ou vers l'arrière, le dispositif de support de torse de conducteur supplémentaire (70) étant disposé déplaçable d'une position de stationnement (28) à une position de support supplémentaire (29) dans la région de support qui est sinon exempte de siège de véhicule au moyen d'un dispositif de déplacement (26 ; 126).

12. Véhicule utilitaire (6), en particulier véhicule utilitaire agricole, ayant au moins un siège de véhicule (1),
**caractérisé par**
un siège de véhicule (1) selon l'une des revendications précédentes.
